# EUROPEAN PATENT SPECIFICATION

(11) **EP 0 653 691 B1**
(45) Date of publication and mention of the grant of the patent: **24.06.1998**
(21) Application number: 94830227.8
(22) Date of filing: 18.05.1994
(51) Int. Cl.: G05D 16/06

(54) **Improved pressure regulator**
Druckregler
Régulateur de pression

(30) Priority: 21.09.1993 IT BS930100
(43) Date of publication of application: 17.05.1995
(73) Proprietor: NOVA COMET S.r.l., I-25030 Torbole Casaglia (Brescia) (IT)
(72) Inventor: Ravazzolo, Romano, I-25100 Brescia (IT)
(74) Representative: Manzoni, Alessandro

(56) References cited:
- EP-A- 0 279 708
- DE-C- 8 625
- DE-C- 85 996
- DE-C- 1 082 472
- US-A- 4 858 884

## Description

The present invention relates to pressure regulators in general.

The pressure regulators used in supplying gases or other fluids have the fundamental task of automatically keeping supply pressure constant for user appliances, even if and when the pressure above the regulator and/or user absorption vary.

Pressure regulators, particularly those so-called "self-acting", comprise the following components inside a body provided with an inlet passage and an outlet passage for the fluid:
- a flexible measuring instrument designed to detect any pressure variations inside the regulator, including a membrane supported by a plate and anchored peripherally in the body of the regulator,
- an interception element for varying flow rate according to any pressure variations as detected by the membrane and stopping fluid supply through the regulator, between the inlet and outlet passages,
- a loading or reaction element, usually a spring, acting on said measuring flexible element for calibration thereof.

In traditional pressure regulators, the interception element comprises a rocking lever which is connected, at one end, to the measuring element (membrane) and, at the other end, supports a stopper associated with a hole provided in the body, between the inlet and outlet passages for the fluid. The loading or reaction spring acts perpendicularly on the measuring element and its preload may be adjusted through calibration means mounted on the body of the regulator.

Some more recent pressure regulators comprise loading or reaction springs with fixed preloads, so as to eliminate any calibration and adjustment means; however, such springs require high precision in construction and behaviour.

In another embodiment of the pressure regulator, the rocking stopper is eliminated and the measuring element itself functions as an interception element. In this case, a portion of the membrane functions as a stopper associated with a hole provided in the body, between the inlet and outlet passages for the fluid, so as to vary the opening thereof according to the displacement of the membrane as a result of the pressure exerted by the fluid supplied.

Starting from such prior art, it is an object of the present invention to provide a pressure regulator which is particularly simple and functional, with reasonable manufacturing costs and production times, in which the number of components is even more reduced as a result of certain improvements applied to the measuring and loading or reaction elements and to the preload adjusting means of the loading or reaction element.

For this purpose, the pressure regulator according to the present invention is characterized in that it comprises a loading element rigidly connected with a part of the measuring element and having a configuration which renders it elastic, and in that the body of the regulator has a portion resting on such elastic loading element, whose configuration allows permanent deformation by varying the precompression of said elastic element, and consequently the force it exerts on the measuring element.

However, further characteristics of the invention will become apparent from the description below, concerning an example of a practical embodiment of the pressure regulator according to the invention, illustrated in the accompanying drawings, in which:
Figure 1 shows a general sectional view of the pressure regulator; and
Figure 2 shows a detail thereof.

The regulator includes a body 10 comprising two complementary elements 11,12, namely a lower element and an upper element, fixed to each other in any way and delimiting a chamber 13 located in-between having an inlet passage 14 for the fluid to be supplied and an outlet passage 15 for the fluid flowing towards the user appliance. More particularly, the inlet passage 14 communicates with the chamber 13 through a hole 16. In such chamber, a membrane 17 is mounted which is supported by a plate 18 and anchored peripherally between the two elements 11,12 constituting the body 10. The membrane comprises a portion 19 which functions as a stopper corresponding to the hole 16 for opening/closing thereof. The membrane 17, in a per se known manner, is designed to detect any variation of fluid pressure inside the chamber 13 and to consequently adjust the delivery of the fluid for the user appliance through the stopper 19 which controls the opening/closing of the hole 16. As a result of the action of the stopper 19 on the hole, a part of the plate and of the membrane are held inside the body 10 between two fulcrum points 11' for adequate displacement of the stopper 19 as a reaction to any pressure variations on the membrane.

Any movements of said membrane 17 are however contrasted by an elastic element 20. According to the invention, said elastic element 20 consists of at least one element having a configuration which permits elastic reaction or flexible in itself, such element being suitable for being applied to or integral with the plate or the membrane. In an embodiment illustrated indicatively in the accompanying drawings, the elastic element 20 comprises at least one flexible band or tongue 21, connected to the plate 18 or to the membrane 17 at one end, and resting against a deformable portion 22 of the upper element 12 of the regulator body 10 at the other end.

The flexible band or tongue 21 and the plate 18 may be made from the same or from a different material. When the tongue or band 21 and the plate are in the same material, the tongue may be made integrally with the plate and form one only unit, laterally or above the plate. Alternatively, the flexible band or tongue 21, whether made from the same material as the plate or from a different material, may be adequately fixed to the plate or to the membrane.
In any case, the tongue or band 21 has a configuration which renders it elastic. In the example illustrated, the tongue or band 21 has a wavy configuration and is adequately pleated so as to be elastic as a result of the flexibility and the variation of angulation at its pleats.

However, it is understood that the elastic element 20 may have any other configuration or location, all of which are within the scope of the inventive concept of the invention.

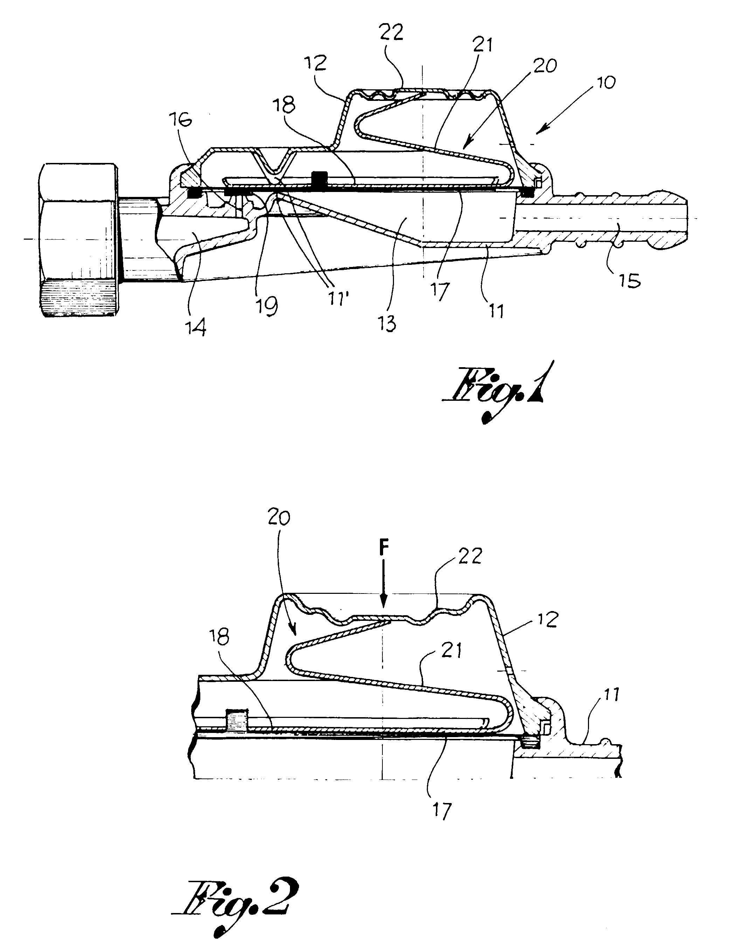

The portion 22 of the body 10, against which the elastic loading element 20 rests, has such a configuration and thickness which permit permanent deformation thereof by applying a force in the direction of arrow F as illustrated in Figure 2 and according to the magnitude of such force.

The load on the membrane, and therefore on the pressure measuring element, may therefore be adjusted through permanent deformation, more or less accentuated, of the deformable portion 22 of the body, which results in variation of the preload of the elastic element 20 and allows calibration of the device, with no need for any sophisticated high-precision springs and with no need to arrange any traditional screw pushing elements or the like mounted on said body.

## Claims

1. A pressure regulator for fluids comprising the following components inside a body (10) provided with an inlet passage (14) and an outlet passage (15) for the fluid to be supplied:
- a flexible measuring instrument designed to detect any pressure variation inside the regulator and including a membrane (17) supported by a plate (18) and anchored peripherally in said body,
- an interception element (17, 19) for varying inlet flow rate according to any pressure variations as detected by the membrane and stopping fluid supply between the inlet and outlet passages,
- a loading or reaction element (20) acting on said measuring flexible element (17, 18) for calibration thereof, characterized in that said loading element (20) is rigidly connected to a part of said measuring element (17, 18) and has a configuration which renders it elastic, or is elastic/flexible in itself, and in that said body (10) has a portion (22) resting on said elastic loading element (20) which may be deformed permanently by applying a pressure in order to vary the preload of said elastic element and consequently the force it exerts on the measuring element.

2. A pressure regulator as claimed in claim 1, wherein said loading element (20) comprises at least one flexible band or tongue (21) connected to the measuring element (17, 18) at one end, and resting against the permanently deformable portion (22) of said body at the other end.

3. A pressure regulator as claimed in claims 1 and 2, wherein said flexible band or tongue (21) is wavy or pleated, so as to be elastic as a result of elastic variation of angulation at its waves or pleats.

4. A pressure regulator as claimed in the previous claims, wherein the flexible band or tongue (21) is made from the same material as the plate and is integral with the plate itself.

5. A pressure regulator as claimed in claims 1-3, wherein the flexible band or tongue (21) and said plate are from the same or from a different material, and the flexible band or tongue (21) is fixed to the plate or to the membrane.

6. A pressure regulator as claimed in claim 1, wherein said elastic element (20) comprises an element of variable length, elastically integral with the plate or with the membrane.

7. A pressure regulator as claimed in claims 1 and 2, wherein the permanently deformable portion (22) of the body (10) is a wall having adequate thickness and form located at the top of the body itself.

8. A pressure regulator as claimed in the previous claims, wherein the measuring flexible element (17,18) has a portion (19) which functions as a stopper and as an interception element as well.

## Patentansprüche

1. Druckregler für Fluide, welcher im Innern eines Körpers (10), der mit einem Einlaßdurchtritt (14) und einem Auslaßdurchtritt (15) für das zuzuführende Fluid ausgestattet ist, die folgenden Bestandteile aufweist:
- ein biegsames Meßinstrument, das ausgelegt ist, um jegliche Druckänderung im Innern des Reglers zu erfassen, und eine Membran (17) enthält, die durch eine Platte (18) gehalten wird und am Rande in dem Körper verankert ist,
- ein Abfangelement (17, 19) zum Ändern der Einlaßströmungsgeschwindigkeit gemäß beliebiger Druckänderungen, wie sie durch die Membran erfaßt werden, und Anhalten der Fluidzufuhr zwischen dem Einlaß- und dem Auslaßdurchtritt,
- ein Belastungs- oder Reaktionselement (20), das auf das biegsame Meßelement (17, 18) für dessen Kalibrierung einwirkt,
dadurch gekennzeichnet, daß das Belastungselement (20) mit einem Teil des Meßelements (17, 18) starr verbunden ist und einen Aufbau hat, der es elastisch macht, oder von sich aus elastisch/biegsam ist, und daß der Körper (10) einen Abschnitt (22) hat, der auf dem elastischen Belastungselement (20) aufliegt, das durch Anlegen eines Druckes dauerhaft verformt werden kann, um die Vorspannung und somit die Kraft des elastischen Elements, die es auf das Meßelement ausübt, zu ändern.

2. Druckregler nach Anspruch 1, bei dem das Belastungselement (20) mindestens ein biegsames Band oder eine biegsame Zunge (21) aufweist, das bzw. die an einem Ende mit dem Meßelement (17, 18) verbunden ist und an dem anderen Ende auf dem dauerhaft verformbaren Abschnitt (22) des Körpers aufliegt.

3. Druckregler nach Anspruch 1 und 2, bei dem das biegsame Band oder die biegsame Zunge (21) gewellt oder geriffelt ist, um als Folge einer elastischen Änderung der Winkelung an den Wellen bzw. Riffelungen elastisch zu sein.

4. Druckregler nach einem der vorhergehenden Ansprüche, bei dem das biegsame Band oder die biegsame Zunge (21) aus demselben Material wie die Platte besteht und mit der Platte selbst einstückig ist.

5. Druckregler nach Anspruch 1 bis 3, bei dem das biegsame Band oder die biegsame Zunge (21) und die Platte aus demselben oder aus einem unterschiedlichen Material bestehen, und das biegsame Band oder die biegsame Zunge (21) an der Platte oder an der Membran befestigt ist.

6. Druckregler nach Anspruch 1, bei dem das elastische Element (20) ein Element veränderlicher Länge aufweist, das mit der Platte oder mit der Membran elastisch einstückig ist.

7. Druckregler nach Anspruch 1 und 2, bei dem der dauerhaft verformbare Abschnitt (22) des Körpers (10) eine am oberen Teil des Körpers selbst angeordnete Wand mit passender Dicke und Form ist.

8. Druckregler nach einem der vorhergehenden Ansprüche, bei dem das biegsame Meßelement (17, 18) einen Abschnitt (19) hat, der als Anschlag sowie als Abfangelement arbeitet.

## Revendications

1. Un régulateur de pression pour fluides comprenant les éléments suivants à l'intérieur d'une enveloppe (10) munie d'un passage d'entrée (14) et d'un passage de sortie (15) du fluide à distribuer:
- un élément flexible de mesure destiné à relever toutes les variations de pression à l'intérieur du régulateur, formé par une membrane (17) reposant sur une plaque (18) et ancrée dans la partie périphérique de l'enveloppe;
- un élément de barrage (17, 19) servant à varier le débit d'entrée du fluide en fonction des variations de pression éventuelles détectées par la membrane, et à arrêter l'amenée de fluide entre les passages d'entrée et de sortie;
- un élément de charge ou de réaction (20) agissant sur l'élément flexible de mesure (17, 18) pour le calibrage de ce dernier, caractérisé par le fait que ledit élément de charge (20) est solidaire d'une partie de l'élément de mesure (17, 18) et a une forme qui le rend élastique ou bien est lui-même élastique/flexible, et qu'un segment (22) de l'enveloppe (10) repose sur l'élément élastique de chargement (20), ce segment pouvant subir une déformation permanente par l'application d'une certaine pression de façon à varier la précharge sur ledit élément élastique et, par conséquent, la force appliquée par ce dernier à l'élément de mesure.

2. Un régulateur de pression conforme à la revendication 1 dans lequel l'élément de charge (20) est constitué par au moins une bande ou languette flexible (21) reliée par une extrémité à l'élément de mesure (17, 18) et reposant, à l'autre extrémité, contre le segment déformable de façon permanente (22) de l'enveloppe.

3. Un régulateur de pression conforme aux revendications 1 et 2 dans lequel la bande ou languette flexible (21) est ondulée ou pliée de façon à devenir élastique du fait de la variation élastique de position angulaire au niveau de ses ondulations ou de ses pliures.

4. Un régulateur de pression conforme aux revendications ci-dessus dans lequel la bande ou languette flexible (21) est réalisée avec le même matériau que la plaque et forme un tout avec la plaque elle-même.

5. Un régulateur de pression conforme aux revendications 1 - 3 dans lequel la bande ou languette flexible (21) et la plaque sont du même matériau ou d'un matériau différent et où la bande ou languette flexible (21) est fixée à la plaque ou à la membrane.

6. Un régulateur de pression conforme à la revendication 1 dans lequel l'élément élastique (20) est constitué par un élément de longueur variable formant un tout élastique avec la membrane ou la plaque.

7. Un régulateur de pression conforme aux revendications 1 et 2 dans lequel le segment déformable de façon permanente (22) de l'enveloppe (10) est une paroi d'épaisseur et de forme appropriées située au sommet du corps lui-même.

8. Un régulateur de pression conforme aux revendications ci-dessus dans lequel l'élément flexible de mesure (17, 18) présente un élément (19) ayant la fonction à la fois de butée et de barrage.
